# EUROPEAN PATENT APPLICATION

(11) **EP 1 518 463 A1**
(43) Date of publication of application: **30.03.2005**
(21) Application number: 03078064.7
(22) Date of filing: 26.09.2003
(51) Int. Cl.: A23D 7/00, A23L 1/30

(54) **Fat emulsions with components with anti platelet activity**

(71) Applicant: UNILEVER N.V., 3013 AL Rotterdam (NL)
(72) Inventor: Frenken, Leo Gerardus J. c/o Unilever R&D, 3133 AT Vlaardingen (NL); De Graaf Young M. c/o Unilever R&D Vlaardingen, 3133 AT Vlaardingen (NL); Kroner Christine I. c/o Unilever R&D Vlaardingen, 3133 AT Vlaardingen (NL)
(74) Representative: Kleiborn, Paul Erik

(57) **Abstract**

The invention concerns water- or fat- continuous fat emulsions with a water content of at least 5 wt % comprising an effective amount of a food grade nutritional component with anti platelet activity which food grade nutritional component is selected from the aglycon form of esters of propionic acid substituted in the 3-position by a -CH2CH=O residue and by a -C(=C-CH3)CH=O residue and / or by hydrated forms thereof ,while the alcohol residue is an ethanol derivative substituted in the 2-position by a hydroxyphenyl group with at least a hydroxy group in the 4-position and with a method for making fat emulsions with anti thrombotic activity by incorporating in a fat emulsion an effective amount of a food grade nutritional component which component comprises the aglycon form of esters of propionic acid substituted in the 3-position by a -CH2CH=O residue and by a -C(=C-CH3)CH=O residue and / or by hydrated forms thereof, while the alcohol residue is an ethanol derivative substituted in the 2-position by a hydroxyphenyl group with at least a hydroxy group in the 4-position or of an blend of these propionic acid derivatives and at least one other component wherein the other component is selected from the group consisting of water, natural fats, randomised fats, fractions of natural or randomised fats, hardened fats or fractions of hardened fats

## Description

Normal blood circulation is secured by a balanced and fine-tuned interaction between plasma proteins, blood cells and tissues of the blood vessel wall. Any disturbance of this balance, e.g. by lifestyle factors (smoking), ageing, an injury of the vessel wall, results in formation of a haemostatic plug or a thrombus. Thrombosis is considered to be the result of two processes: initial assembly of a platelet plug and stabilisation of the plug due to coagulation. While this haemostasis represents the physiological response to vessel injury, it has a pathological counterpart in the process of thrombosis, e.g. the occlusion of an intact vessel by an undesired haemostastic plug which also occludes the blood vessel and impairs or stops the blood circulation As thrombosis is a major cause of death in Western industrialised countries (Murray et al., 1996 Global health statistic, a compendium of indices, prevalence and mortality estimates for 200 conditions) many attempts have been made to find health components that could be used to prevent / treat / cure thrombosis, either by inhibiting platelet activity or by reducing the tendency of the blood to clot. However most of the components that were found to be effective are synthetic pharmaceutical compounds, which cannot be used in food. However in literature indications can also be found that extracts from olives contain components that might be active as platelet sedating compounds (cf e.g Petroni et al., Thrombosis Res 78 1995 p. 151-160 and WO 99/38383). These components are present in higher amounts in olive oil extracts but also in the wastewater that is obtained as side stream during the olive oil processing. They can also be obtained from olive leafs or possibly other plants such as jasminum officinale.

Petroni et al (1995) shows that wastewater has an activity in this respect (80 % inhibition in platelet aggregation). Two purified components of this wastewater were identified to have an effect i.e.: hydroxytyrosol (55 % inhibition) and oleuropein (11 % inhibition).

We performed a study to try to find more active and more effective compounds that have a high anti platelet activity. Moreover these compounds should be food grade so that they can be applied in food products and should be obtainable in a relatively easy way. Further these compounds should be applicable in fat emulsions without destroying the required performance of the emulsion both in the sense of taste or mouth feel and in rheological sense.

When analysing HPLC fractions of olive oil wash water we surprisingly found other components which have in vitro a much stronger/higher activity than hydroxytyrosol and oleuropein.These components are aglycon forms of esters of propionic acid substituted in the 3-position by a -CH2CH=O residue and by a -C(=C-CH3)CH=O residue and / or by hydrated forms thereof , while the alcohol residue is an ethanol derivative substituted in the 2-position by a hydroxyphenyl group with at least a hydroxy group in the 4-position. Particular components being deacetoxyoleuropein aglycon and deacetoxyligstroside aglycon.
These components also can exist in the form of a ring structure which is in equilibrium with the hydrated forms ( the acetals) These components are in particular present in the wash water of olive oils and are obtained therefrom in the form of concentrates in water that make them very suitable for use in foods.

Further it was found that the components could be obtained in a form that is food grade while the fat emulsions containing the components do not deteriorate in product performance. These components and concentrates showed a far higher anti thrombotic activity than oleuropein.

Therefore our invention concerns in the first instance water or fat continuous fat emulsions with a water content of at least 5 wt % comprising an effective amount of a food grade nutritional component with anti platelet activity which food grade nutritional component is selected from the aglycon form of esters of propionic acid substituted in the 3-position by a -CH2CH=O residue and by a -C(=C-CH3)CH=O residue and / or by hydrated forms thereof, while the ester residue is an ethanol derivative substituted in the 2-position by a hydroxyphenyl group with at least a hydroxy group in the 4-position.
It is likely that the glycol forms of these substituted propionic ester derivatives display similar activities.

Examples of applicable emulsions are spreads, mayonnaises, dressings, ice creams, creams, drinks in particular yoghurt or milk drinks and bars containing a water phase.

The effective amount is defined as that amount that results in a inhibition in platelet aggregation of at least 5 %, preferably at least 10 % and most preferably at least 15 % based on platelet activity measurements in blood taken from people after consumption of the product.
And in particular at emulsions wherein the emulsion comprises between 2 and 100 mg , preferably between 4 and 75 mg , more preferably between 8 and 50 mg and most preferably between 12 and 30 mg of the propionic derivative per dose.

The fat emulsion can be any fat emulsion, so independent on the fat level and whether the emulsion is water continuous or fat continuous but we found that in particular emulsions wherein the propionic acid derivative is part of the water phase are very effective for the purpose of our invention. However we also can apply food products wherein at least part of this component is part of the fat phase. Although the active propionic acid derivative can be derived from many sources we prefer to use food grade nutritional components derived from olives, in particular from ( purified ) wash water obtained as a side stream from the production of olive oil.
These emulsions can be made by any known method for making fat or water continuous emulsions.
The active propionic derivative could be applied in its pure form ( i.e as a blend of different phenol substituted propionic acid ester derivatives ) but in general we prefer to use the active component as part of a blend with other compounds. Therefore we have a preference for fat emulsions comprising an effective amount of a blend of a food grade nutritional component with anti platelet activity which food grade nutritional component is selected from the aglycon form of esters of propionic acid substituted in the 3-position by a -CH2CH=O residue and by a -C(=C-CH3)CH=O residue and / or by hydrated forms thereof, while the alcohol residue is an ethanol derivative substituted in the 2-position by a hydroxyphenyl group with at least a hydroxy group in the 4-position and at least one other component and wherein the other component is selected from the group consisting of water, natural fats, randomised fats, fractions of natural or randomised fats, hardened fats or fractions of hardened fats. Here again the active component is preferably the component derived from olive wash water. The use of the blends enables us to incorporate the active component directly in the food product as e.g. the water phase or the fat phase of the product. This makes the preparation of these food products easier.

Our products can be applied to treat / prevent or cure thrombosis and therefore our invention also concerns a method for treating / curing / preventing of thrombosis in humans by administering the humans in need of such a treatment an effective daily amount of a food grade nutritional component with anti platelet activity which component is selected from the aglycon form of esters of propionic acid substituted in the 3-position by a -CH2CH=O residue and by a -C(=C-CH3)CH=O residue and / or by hydrated forms thereof, while the alcohol residue is an ethanol derivative substituted in the 2-position by a hydroxyphenyl group with at least a hydroxy group in the 4-position or by administering an effective daily amount of a blend comprising the propionic acid derivative and at least one other component wherein the other component is selected from the group consisting of water, natural fats, randomised fats, fractions of natural or randomised fats, hardened fats or fractions of hardened fats.
In the above method we prefer to apply as food grade nutritional component, components that are derived from olives and in particular from olive wash water as can be obtained as a side stream in the production of olive oil.

The active propionic derivative can also be combined with other ingredients, such as e.g. tomato and / or grape extracts which have similar effects in order to get an even stronger (synergistic) effect by which lower dosing is possible.

According to another embodiment of our invention we can use our components to make a fat emulsion with the desired anti thrombotic effect. So our invention also concerns a method for making fat emulsions with anti thrombosis activity by incorporating in a fat emulsion an effective amount of a food grade nutritional component which component comprises the aglycon form of esters of propionic acid substituted in the 3-position by a -CH2CH=O residue and by a -C(=C-CH3)CH=O residue and / or by hydrated forms thereof, while the alcohol residue is an ethanol derivative substituted in the 2-position by a hydroxyphenyl group with at least a hydroxy group in the 4-position or of an blend of these propionic acid derivatives and at least one other component wherein the other component is selected from the group consisting of water, natural fats, randomised fats, fractions of natural or randomised fats, hardened fats or fractions of hardened fats.

Again the components derived from olive wash water are preferred in this process. The above method preferably is applied to make fat emulsions wherein the amount of the effective component is between 2 and 100 mg , preferably between 4 and 75 mg , more preferably between 8 and 50 mg and most preferably between 12 and 30 mg per food serving or dose.

### Examples

### 1. Food grade production of olive wash water ( ww 1) enriched with deacetoxyoleuropein aglycon (DOA)

Greek EVOV produced of unripe Tsounati olives was washed with water on pilot plant scale with demineralised water. The experiment was performed in a stainless steal conical vessel with oil/ water ratio 1/1 at a temperature of 30°C. The oil water mixture was stirred for 15 minutes at a stirring speed of 125 rpm. After settling for 1 hour, the water phase was separated and run over a ~10µm filter. The entire production process was performed under nitrogen. DOA content was determined in the water extract called ww 1.

### Analysis

Phenolic content in wash water was determined by HPLC analysis: ww1 was filtered through 0.45 µm nylon filter (Millex HN; Millipore) and an aliquot (20 µl) was injected into the HPLC system. Separation on LiChrospher 100 RP-18 column (250 x 4 mm i.d., 5 µm, Merck) with a 10 mm guard cartridge (LiChroCART 250-4) was performed at 27 °C under a constant flow rate of 1 ml/min and the following gradient program (in %): t=0 min, A (0.5 % formic acid, v/v) / B (methanol/acetonitril 50:50, v/v) = 95/5; t=15 min, A/B = 70/30; t=30 min, A/B = 65/35; t=37 min, A/B = 60/40; t=50 min, A/B = 30/70; t=55 min, A/B = 0/100, held for 5 min followed by returning to the starting ratio (for 7 min) and the column equilibration (8 min). Eluted compounds were detected at a wavelength of 280 nm. Phenolic compounds were quantified at 280 nm by means of p-hydroxyphenylacetic acid as an internal standard.

Apparatus: for the absorbance measurement a Shimadzu Spectrophotometer UV-2101PC (Kyoto, Japan) was used. The instrument used for the determination of phenolics profile was a Shimadzu high-performance liquid chromatograph, equipped with two pumps LC- 10ADVP, a photodiode array detector SPD-M10AVP operating in the range 190-800 nm, and an automatic injector SIL-10ADVP. The Shimadzu Software package Class-VP 5.032 was used for data acquisition and processing.

### 2. Effect of ww 1 DOA fraction, hydroxytyrosol, tyrosol and oleuropein on platelet aggregation induced with different agonists.

The effect of ww 1, DOA fraction 9 fraction B below ), hydroxytyrosol, tyrosol and oleuropein on platelet aggregation according to Born (Born G.V.R. Quantitative investigations into the aggregation of blood platelets. J Physiol Lond 162, 67, 1962) was tested in platelet rich plasma as well as in washed platelets. For all pure molecules a concentration of 10 uM was used. In order to compare the bio-activity of ww 1 (which contain DOA (deacetoxyoleuropein aglycon and many other phenols) with the pure DOA fraction, the ww1 was equilibrated at 10 uM DOA. The molar content of the different phenols in ww1 was: DOA 60 %, oleuropein < 0.02 %, tyrosol 5 %, hydroxytyrosol 10 %.

WW1 inhibited platelet aggregation with 73% and the DOA fraction with 61% whereas hydroxytyrosol, tyrosol and oleuropein did not show any significant inhibition. As the bioactivity of DOA is approx. 60% compared to the control and ww 1 73% compared to the control, it can be concluded that the bioactivity of ww 1 can be attributed mostly to DOA. Since hydroxytyrosol, tyrosol and oleuropein inhibited platelet aggregation respectively 13%, -9%, 7% and the variation between the different experiments is respectively 35%, 6%, 28%, this inhibition can not be considered as significant.

Unstimulated platelets did not show any activity indicating that platelets were not pre-activated.

Based on these results, we conclude that DOA fraction has a much higher potential to inhibit platelet aggregation in vitro compared to other olive phenols occurring in ww 1 such as hydroxytyrosol, tyrosol and oleuropein.

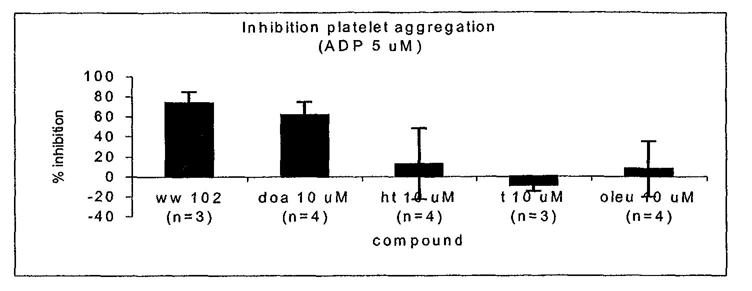

**Figure 1:** Effect of ww 1, DOA, hydroxytyrosol, tyrosol and oleuropein on agonist induced platelet aggregation. This figure shows the effect of 10 µM ww 1, DOA, hydroxytyrosol, tyrosol or oleuropein on ADP induced platelet aggregation. Inhibition is relative to the control. The dilutions are the final dilutions. The error bars are the standard deviations of at least 3 different measurements.

### 3.1 Results of human in vitro study with purified phenol fractions.

To study the effects of olive phenols on signal transduction processes in human platelets, we first started a series of in vitro measurements in which fractions from olive wash water were added to platelet preparations. Experiments were performed with diluted ww 1. In addition, HPLC fraction, A, B and C were tested of which fraction B contained a major phenol of interest, and fractions A and C served as controls. Fraction B contained 125 ppm DOA whereas fraction A and C contained no DOA. The following procedure was followed for the preparation of fraction A, B and C.

### Procedure

- Sample filtered over 0.2 µm.
- First injection 40 µl to determine fractionation times.
- 10 injections of 500µl of sample wash water carried out.
- Three fractions were collected. The peak between 14 and 15 minutes corresponds with the active fraction from previous fractionations. The other fractions have been collected one minute before and after this peak.

### Materials and methods

HP1090 HPLC system
UV 280 nm, bw 20 nm; ref 450 nm, bw 80 nm
Solvent A; water/acetic acid 98/2
Solvent B; ethanol/acetic acid 98/2
Gradient, flow 1 ml/min:

| | | |
|---|---|---|
| 0 - 3 min | 80% A | 20% B |
| 3 - 13 | 50% A | 50% B |
| 13 - 15 | 50% A | 50% B |
| 15 - 16 | 5% A | 95% B |
| 16 - 26 | 5% A | 95% B |
| 26 - 26.5 | 80% A | 20% B |

Column thermostat, set at 35°C, equipped with a rheodyne manual injector 7125 with 500 µl loop. Phenomenex Luna phenyl-hexyl column 250 x 4.6 mm, 5 µm, placed in Mistral.

### 3.2 Platelet aggregation (in Platelet Rich Plasma)

The effect of 1:100 dilutions in saline of WW 1 and fractions A-C were studied on platelet aggregation in response to various physiologically relevant agonists. It appeared that both WW 1 and fraction B reduced platelet aggregation in response to collagen and ADP (Fig. 2 and Table 1). Fractions A and C were inactive. ADP-induced aggregation is mediated via the P2Y1 and P2Y12 receptors. Collagen-induced aggregation involves the glycoprotein VI receptor, but is also dependent on ADP secreted by the platelets. The effect of WW 1 and fraction B could thus be due to either or both glycoprotein VI and ADP receptor-mediated signalling pathways.

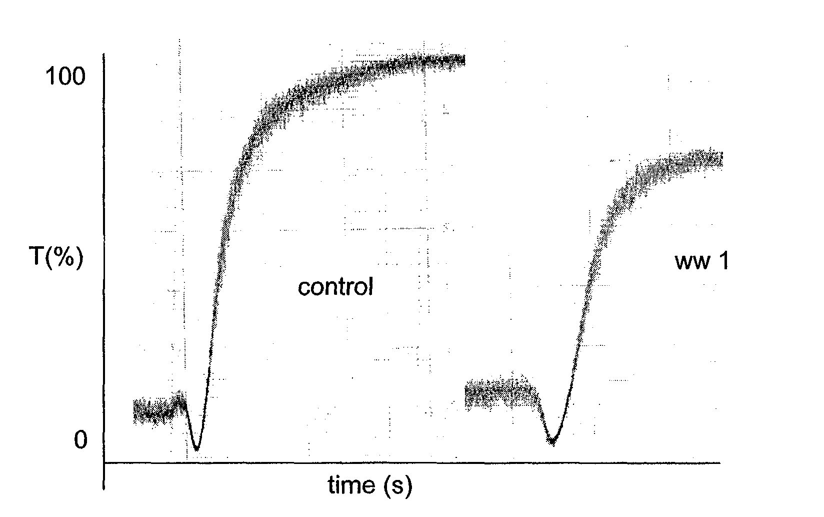

**Fig. 2. Effect of olive ww 1 on platelet aggregation in vitro.** This is a representative collagen induced platelet aggregation curve in which the light transmission is plotted as a function of time. Human citrated PRP (2 x 10⁸ platelets/ml) was recalcified in the presence of the fibrin polymerisation inhibitor PPACK (20 µM) with 16.6 mM CaCl₂. Platelets were activated with collagen (3 µg/ml). At 10 min before activation, WW 1 was added (1:100).

### Table 1. Effect of olive ww 1 on platelet aggregation in vitro.

Human citrated PRP (2 x 10⁸ platelets/ml) was recalcified in the presence of PPACK (20 µM) with 16.6 mM CaCl₂. Platelets in PRP were activated with collagen (3 µg/ml) or ADP (20 µM), and aggregation was measured. At 10 min before activation, WW 1 was added (1:100). Fractions A, B or C were given dilutions of 1:100 (f.c.) after neutralisation with Tris. Maximum aggregation is given as %T (mean ± S.D., n=3-5).

**Table 1.**

| Aggregation (%T) | Control | WW | Fractio n A | Fractio n B | Fractio n C |
|---|---|---|---|---|---|
| | | | | | |
| Collagen | 66.7 ± 7.0 | 53.0 ± 4.7* | 65.9 ± 1.8 | 60.5 ± 4.2 | 63.9 ± 4.4 |
| ADP | 78.5 ± 5.9 | 60.7 ± 5.5* | 75.8 ± 2.0 | 63.2 ± 1.0* | 73.0 ± 3.5 |

| | | | | | |
|---|---|---|---|---|---|
| *P<0.05 compared to control. | | | | | |

### 3.3 Platelet calcium responses

Calcium responses were measured in Fura-2-loaded platelets to compare direct and indirect collagen-induced effects. The WW 1 extract could not be used here because of its high fluorescence. The fractions A-C also interfered with the Fura-2 fluorescence, in a way resulting in lower apparent increases in cytosolic [Ca²⁺]ᵢ, but measurements could still be performed. As indicated in Table 2, stimulation of the platelets with the glycoprotein VI ligands, CRP (collagen related peptide) or convulxin^{TR}, resulted in a potent rise in [Ca²⁺] ᵢ. This Ca²⁺ response apparently was reduced in the presence of fractions A-C, but this apparent reduction could be explained by fluorescence artefacts. A similar apparent reduction in Ca²⁺ response was observed in platelets stimulated with the PAR agonists, thrombin or SFLLRN. Again, interference of fractions A-C with the Fura-2 fluorescence explains the apparently altered responses. However, fraction B was unique in causing a considerably delayed Ca²⁺ response with CRP or convulxin (Fig. 3.). This suggests that the phenols in fraction B delay the glycoprotein VI- (collagen-) induced platelet activation. The glycoprotein VI-induced Ca²⁺ response partly depends on PI 3-kinase activation. However, the effect of fraction B differs from that of established PI 3-kinase inhibitors, because the latter compounds only reduce but not delay the Ca²⁺ signal with convulxin or CRP.

**Table 2. Effect of olive phenols on platelet calcium responses in vitro**. Human washed, fura-2-loaded platelets (7 x 10⁷ platelets/ml) were activated with thrombin (4 nM), SFLLRN (15 µM), CRP (5 µg/ml) or convulxin (50 ng/ml) in the presence of 1 mM CaCl₂. Where indicated, 1 mM EGTA was present instead of CaCl₂. At 10 min before activation, fractions A, B or C were added at 1:100 (f.c.). These fractions were neutralised before adding. Data are maximal rises in cytosolic [Ca²⁺]ᵢ (nM) or [Ca²⁺]ᵢ-time integrals (mM x s) (mean ± S.D., n=3-5).

**Table 2**

| *Agonist* | *Control* | *Fraction A* | *Fraction B* | *Fraction C* |
|---|---|---|---|---|
| ***Rise in*** [***Ca***^{***2***}^{**+**}]_{***i***} (***nM***) | | | | |
| CRP | 396 ± 40 | 243 ± 8 | ***194 + 6***^{***$***} | 266 ± 10 |
| Convulxin | 640 ± 94 | 243 ± 8 | *315 ±* ***34***^{***$***} | 385 ± 54 |
| Thrombin | 319 ± 8 | 182 ± 32 | 166 ± 52 | 196 ± 60 |
| Thrombin/EGTA | 171 ± 59 | 119 ± 23 | 109 ± 37 | 93 ± 46 |
| SFLLRN | 321 ± 80 | 200* | 185 ± 21 | 168* |

| ***Integral*** (***mM* x *s***) | | | | |
|---|---|---|---|---|
| CRP | 48.1 ± 7.0 | 8.6 ± 0.2 | 14.7 ± 0.2 | 23.1 ± 0.2 |
| Convulxin | 93.6 ± 10.9 | 54.5 ± 4.3 | 49.2 ± 5.9 | 56.5 ± 6.0 |
| Thrombin | 24.3 ± 6.8 | 7.6 ± 2.1 | 8.7 ± 4.2 | 8.9 ± 1.0 |
| Thrombin/EGTA | 4.7 ± 2.8 | 2.2 ± 0.5 | 2.8 ± 0.8 | 1.7 ± 1.2 |
| SFLLRN | 16.7 | 8.4 | 10.0 | 6.2 |

| | | | | |
|---|---|---|---|---|
| *n = 2; ^{$}calcium peak delayed with 60-90 seconds. | | | | |

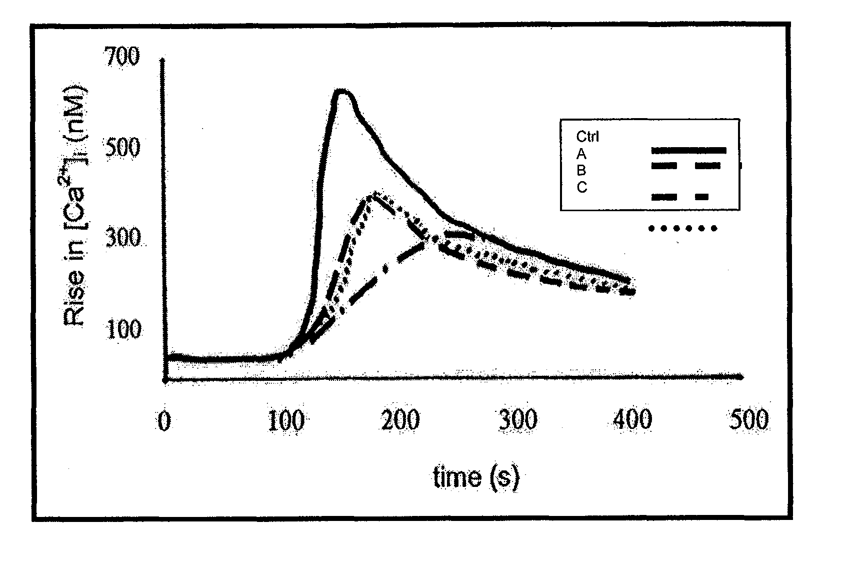

**Fig**. **3**. **Effect of olive phenols on platelet calcium responses**. Example of delayed convulxin-induced Ca²⁺ response (50 ng/ml) evoked by fraction B, but not by fractions A and C. Similar results were obtained with CRP. Representative traces are shown.

### 3.4. Platelet-dependent coagulation (PRP)

To study the effect of phenols on platelet responses under more physiological conditions, we determined effects on platelet-dependent thrombin generation. In PRP, triggered with tissue factor, thrombin generation completely relies on the presence and activation of platelets. We found that both WW 1 and fraction B significantly reduced the peak level in thrombin generation curves. Other thrombogram parameters such as time-to-peak and area under the curve (i.e. endogenous thrombin potential, ETP) were not influenced by WW 1 or fraction B. Control experiments showed that the reduced peak level was not due to fluorescence artefacts, because of the higher absorption wavelength of generated aminomethyl coumarin. As the thrombin peak level is the thrombogram parameter that is mostly determined by the degree of platelet activation - i.e. particularly sensitive to ADP receptor blockers -, this result suggests that both WW 1 and faction B reduce platelet activation in the coagulating plasma with, as a consequence, a reduced rate of thrombin formation. In contrast, the ETP, reflecting the total thrombin-forming activity of the coagulation system, appears not to be changed by the polyphenol fractions.

**Table 3. Effect of olive phenols on thrombin generation in PRP in vitro.** Human, citrated PRP (2 x 10⁸ platelets/ml) was triggered with 0.5 pM tissue factor and 16.6 mM CaCl₂. Preincubation was with WW 1 (1:100) or faction B (1:100) for 10 min. Fraction B was neutralised with Tris before use. Thrombin generation was followed from the cleavage of fluorescent thrombin substrate Z-GGR-AMC in 96-well plates. Fluorescence values were converted into thrombin concentrations using an internal thrombin standard. Endogenous thrombin potential (ETP) stands for area under the curve. Data are mean values ± S.D. (n).

**Table 3**

| | Control | WW | Control | Fraction B |
|---|---|---|---|---|
| | | | | |
| Time to peak (min) | 19.1±1.6(9) | 20.7±2.4 (9) | 18.8±2.3(9) | 18.2±3.1(4) |
| Thrombin peak (nM) | 97.1±25.5(9) | 80.8±17.4 (9)* | 113.8±26.6(9) | 97.6±24.4(4)* |
| ETP (nM x min) | 1396±275(9) | 1369±252 (9) | 1227±217(9) | 1471±204(4) |

| | | | | |
|---|---|---|---|---|
| *P<0.05 compared to control. | | | | |

## Claims

1. Water- or fat- continuous fat emulsions with a water content of at least 5 wt % comprising an effective amount of a food grade nutritional component with anti platelet activity which food grade nutritional component is selected from the aglycon form of esters of propionic acid substituted in the 3-position by a -CH2CH=O residue and by a -C(=C-CH3)CH=O residue and / or by hydrated forms thereof ,while the alcohol residue is an ethanol derivative substituted in the 2-position by a hydroxyphenyl group with at least a hydroxy group in the 4-position.

2. Fat emulsion according to claim 1, wherein the propionic acid derivative is an deacetoxyoleuropein aglycon or a deacetoxyligstroside aglycon.

3. Fat emulsion according to claims 1 to 2, wherein the fat emulsion comprises between 2 and 100 mg of the propionic acid derivative per dose.

4. Fat emulsion according to claims 1 to 3, wherein the propionic acid derivative is part of the water phase.

5. Fat emulsion according to claims 1 to 4 wherein the propionic acid derivative is obtained from olives, in particular in the form of wash water obtained as a side stream during the production of olive oil.

6. Fat emulsion with a water content of at least 5 wt % comprising an effective amount of a blend of a food grade nutritional component with anti platelet activity which food grade nutritional component is selected from the aglycon form of esters of propionic acid substituted in the 3-position by a -CH2CH=O residue and by a -C(=C-CH3)CH=O residue and / or by hydrated forms thereof ,while the alcohol residue is an ethanol derivative substituted in the 2-position by a hydroxyphenyl group with at least a hydroxy group in the 4-position and wherein the other component is selected from the group consisting of water, natural fats, randomised fats, fractions of natural or randomised fats, hardened fats or fractions of hardened fats.

7. Fat emulsion according to claim 6 wherein the blend of food grade nutritional component and other component comprises between 2 and 100 mg of the propionic acid derivative per dose.

8. Method for treating / curing / preventing of thrombosis in humans by administering the humans in need of such a treatment an effective daily amount of a food grade nutritional component with anti platelet activity, which component is selected from the aglycon form of esters of propionic acid substituted in the 3-position by a -CH2CH=O residue and by a -C(=C-CH3)CH=O residue and / or by hydrated forms thereof, while the alcohol residue is an ethanol derivative substituted in the 2-position by a hydroxyphenyl group with at least a hydroxy group in the 4-position or by administering an effective daily amount of a blend comprising the propionic acid derivative and at least one other component selected from the group consisting of water, natural fats, randomised fats, fractions of natural or randomised fats, hardened fats or fractions of hardened fats.

9. Method according to claim 8 wherein the propionic acid derivative is obtained from olives, in particular in the form of wash water obtained as a side stream during the production of olive oil.

10. Method according to claim 8 wherein the effective daily amount of the food grade nutritional component is between 2 and 100 mg.

11. Method for making fat emulsions with anti thrombosis activity by incorporating in a fat emulsion an effective amount of a food grade nutritional component which component comprises the aglycon form of esters of propionic acid substituted in the 3-position by a -CH2CH=O residue and by a -C(=C-CH3)CH=O residue and / or by hydrated forms thereof, while the alcohol residue is an ethanol derivative substituted in the 2-position by a hydroxyphenyl group with at least a hydroxy group in the 4-position or of an blend of these propionic acid derivatives and at least one other component wherein the other component is selected from the group consisting of water, natural fats, randomised fats, fractions of natural or randomised fats, hardened fats or fractions of hardened fats

12. Method according to claim 11 wherein the food grade nutritional component is derived from olives, in particular from wash water obtained as a side stream from the production of olive oil.

13. Method according to claim 11 wherein the effective amount of the propionic acid derivative is more than 2 mg per food serving.
